# EUROPÄISCHE PATENTSCHRIFT

(11) **EP 0 747 609 B1**
(45) Veröffentlichungstag und Bekanntmachung des Hinweises auf die Patenterteilung: **05.09.2001**
(21) Anmeldenummer: 96106430.0
(22) Anmeldetag: 24.04.1996
(51) Int. Cl.: F16D 55/224, F16D 65/097

(54) **Teilbelagscheibenbremse**
Partially lined disc brake
Frein à disque à garniture partielle

(30) Priorität: 09.06.1995 DE 29509484 U
(43) Veröffentlichungstag der Anmeldung: 11.12.1996
(73) Patentinhaber: Lucas Industries Limited, London W1Y 4DJ (GB)
(72) Erfinder: Neudeck, Donatus, 56567 Neuwied (DE); Willmes, Thomas, 56179 Niederwerth (DE); Walden, Christoph, 56645 Nickenich (DE)
(74) Vertreter: Schmidt, Steffen J., Dipl.-Ing.

(56) Entgegenhaltungen:
- DE-A- 3 434 421
- US-A- 4 245 723
- US-A- 4 422 534

## Beschreibung

Die vorliegende Erfindung betrifft eine Teilbelagscheibenbremse mit einem Bremsträger, an dem zwei im Abstand zueinander angeordnete Bremsbeläge gehaltert sind, die zwischen sich eine sich um eine Rotationsachse drehende Bremsscheibe aufnehmen, wobei die beiden Bremsbeläge mit der Bremsscheibe durch eine Zustellbewegung in Eingriff bringbar sind, einer an dem Bremsträger angeordneten Brücke, die die Bremsbeläge und die Bremsscheibe übergreift und in der Bewegungsrichtung der Bremsbeläge durch eine Betätigungsvorrichtung gegenüber dem Bremsträger verschiebbar ist, wobei die Betätigungsvorrichtung die Zustellbewegung der Bremsbeläge bewirkt, und wenigstens einem Federelement, das die Bremsbeläge nach einer Zustellbewegung wieder voneinander wegbewegt.

Aus der DE 1 775 586 C3 ist eine Teilbelagscheibenbremse mit einem Paar Seitenflächen, von denen mindestens je ein Abschnitt zur Übertragung von Bremskräften an einem tragenden Bremsenteil abstützbar ist, einem Paar Aussparungen, einem Paar Führungskörper, die in je einer der Aussparungen aufgenommen sind, und einer mit den Führungskörpern verbundenen Rückstellfederanordnungen bekannt. Dabei sind Führungskörper und Rückstellfederanordnung an einem gemeinsamen Halteblech für beide Bremsbeläge ausgebildet, das sowohl senkrecht zur Bremsscheibenebene als auch in Umfangsrichtung der Bremsscheibe gesehen um mehr als 90° nach innen verlaufende Abbiegungen aufweist. Die beiden parallel zur Bremsscheibenebene verlaufenden Abbiegungen sind in entsprechende Rillen eines Bremssattels eingerastet, und die beiden anderen, senkrecht zur Bremsscheibe verlaufenden Abbiegungen greifen als Führungskörper in seitliche Aussparungen der Bremsbeläge ein und sollen die herkömmlichen Haltestifte ersetzen. Die Rückstellfederanordnung ist von einer Blattfeder gebildet, die in ihrer Mitte mit dem Halteblech vernietet ist und symmetrisch dazu ein Paar S-förmig gebogener Federabschnitte aufweist. Mit diesen Federabschnitten übt die Blattfeder eine schräg nach unten und außen gerichtete Kraft auf eine Oberkante je eines der beiden Bremsbeläge aus, um diese nach jeder Bremsbetätigung von der Bremsscheibe wegzudrücken.

Bei dieser bekannten Anordnung läßt sich nicht vermeiden, daß die von der Blattfeder auf die Bremsbeläge ausgeübten Federkräfte in Verbindung mit dem Reibungswiderstand, den einerseits die Blattfeder und andererseits die Führungskörper einer Verschiebung der Bremsbeläge entgegensetzen, Momente erzeugen, von denen die Bremsbeläge gekippt werden, anstatt ausschließlich parallel zu sich selbst von der Bremsscheibe weg verschoben zu werden. Wenn eine solche Verschiebung überhaupt auftritt, hat sie ein unbestimmte Größe, da die von der Blattfeder auf die Bremsbeläge ausgeübten Rückstellkräfte in dem Maße zunehmen, in dem die von der Blattfeder belasteten Kanten der Bremsbeläge sich mit zunehmendem Bremsbelagverschleiß der Mitte der Blattfeder nähern, und da die erwähnten Reibungswiderstände nicht in einem konstanten Verhältnis zur Federkraft stehen. Infolgedessen läßt sich mit dieser bekannten Anordnung ein vorgegebenes Bremslüftspiel nicht aufrecht erhalten.

Zur Aufrechterhaltung eines konstanten Bremslüftspiels bei einer Scheibenbremse, insbesondere Vollbelagscheibenbremse, ist deren Betätigungsvorrichtung gemäß der DE 31 42 293 C2 eine hülsenförmige Ausgleichsvorrichtung zugeordnet, die einen im wesentlichen zylindrischen Reibkörper sowie ein von dem einen Ende dieses Reibkörpers radial nach innen ragendes ringförmiges Federelement aufweist. Die Ausgleichsvorrichtung umschließt mit ihrem zylindrischen Reibkörper zwei in der Art einer Kolben-Zylinderanordnung ineinandergreifende Spreizelemente, zwischen denen ein Druckmittelraum ausgebildet ist. Im Ruhezustand ist zwischen Federelement und Reibkörper ein Winkel von weniger als 90° eingeschlossen, und das Federelement drückt nur mit seiner radial inneren Kante gegen das benachbarte Spreizelement. Der Reibkörper ist an dem anderen Spreizelement mit einer Reibungskraft festgehalten, die größer ist als die Rückstellkraft des Federelementes. Die Strecke, um die sich die beiden Spreizelemente auseinanderbewegen lassen, bis das eine von ihnen vollflächig am Federelement anliegt, bestimmt das Bremslüftspiel. Nur wenn diese Strecke überschritten wird, insbesondere durch Bremsbelagabnutzung, nimmt das eine Spreizelement die ganze Ausgleichsvorrichtung mit, so daß deren Reibkörper sich gegenüber dem anderen Spreizelement verschiebt, um nach der Bremsbetätigung in einer neuen Ausgangsstellung stehenzubleiben, in der das gewünschte Bremslüftspiel wieder hergestellt wird. Diese bekannte hülsenförmige Ausgleichsvorrichtung ist für ein unmittelbares Zusammenwirken mit einem Bremsbelag für eine Teilbelag-Scheibenbremse offensichtlich nicht geeignet.

Aus der DE 79 31 220 U1 ist eine Scheibenbremse bekannt, die einen Bremsträger aufweist, in welchem mindestens ein Bremsbelag zur Bremsscheibe und von der Bremsscheibe weg verschiebbar angebracht ist. Der oder jeder Bremsbelag hat dabei einen Rükkenplattenbereich, der sich an den beiden entgegengesetzten Seiten des Bremsbelags bis in die Nähe des Bremsträgers erstreckt. An diesem Rückenplattenbereich ist an den beiden entgegengesetzten Seiten eine Feder befestigt. Die Federn des bzw. jedes Bremsbelages erstrecken sich in Reibungseingriff mit dem Bremsträger, so daß bei einer Bewegung des oder jedes Bremsbelages zur Bremsscheibe die entsprechenden Federn belastet werden und beim Aufheben des Bremsdrucks dieser das Wegbewegen der Bremsbeläge von der Bremsscheibe bewirkt.

Bei einer solchen Bremse werden die Bremsbeläge nicht nur bei Beendigung jeder Bremsbetätigung selbsttätig aus dem Eingriff mit der Bremsscheibe rückgestellt, sondern die Federn jedes Bremsbelags können auch so angeordnet sein, daß sie die zugehörigen Bremsbeläge zu dem Scheibendurchgang im Bremsträger, in dem der Bremsbelag angewendet ist, ausrichten. Das vermindert die Gefahr, daß sich die Bremsbeläge im Bremsträger verklemmen.

Vorzugsweise sind bei dieser Anordnung die Federn so angeordnet, daß der Reibungseingriff zwischen den Federn und dem Bremsträger überwunden wird, wenn die Vorwärtsbewegung des Bremsbelages aus ihrer entspannten Stellung in ihre volle Eingriffsstellung ein vorherbestimmtes Mmaß übersteigt. Dann gleiten die Federn längs der Oberfläche des Bremsträgers um etwa das gleiche Maß, um das die Vorwärtsbewegung des Bremsbelages das genannte vorherbestimmte Maß überschritten hat. Wenn dann die Bremsen freigegeben werden, werden die Bremsbeläge nur um das vorherbestimmte Maß rückgestellt, da die Federn geringfügig längs des Bremsträgers zur Bremsscheibe hin bewegt worden sind. Wenn sich also die Bremsbeläge abnutzen und die Rückenplatte der Bremsbeläge zunehmend näher an die Bremsscheibe rückt, gleiten die Federn längs des Bremsträgers, um zu gewährleisten, daß die Bremsbeläge bei jedem Abnutzungsgrad nach jeder Bremsbetätigung immer um das gleiche vorherbestimmte Maß, dem Lüftspiel, von der Oberfläche der Bremsscheibe rückgestellt werden. Bei der Gleitbewegung der Federn am Bremsträger entlang werden die Ansammlungen von Straßenschmutz und Bremsbelagmaterial, die sich dort gebildet haben, von der Oberfläche des Bremsträgers abgekratzt. Auch dies trägt dazu bei, zu verhindern, daß sich der Bremsbelag in seiner Lage festfrißt.

Aus US 4 245 723 A ist eine Scheibenbremse mit einer Bremsscheibe, zwei Bremsbelägen, einem Bremsträger und einem Bremssattel bekannt. Ein Federelement ist an je einer Seite des Bremsträgers ausschließlich an diesem befestigt und haltert die beiden Bremsbeläge an je einer ihrer Stirnseiten. Das Federelement umfaßt zwei Federabschnitte, die starr miteinander verbunden und derart geformt sind, daß sie je einen Bremsbelag stets von der Bremsscheibe wegdrängen, um Bremslüftspiel herzustellen, und die Bremsbeläge an eine Oberkante des Bremsträgers drängen, um Rattern der Bremsbeläge zu unterdrücken. Ein derartiges Federelement ist leicht zu montieren, führt jedoch bei Abnutzung der Bremsbeläge nicht zu einem definierten Bremslüftspiel.

Aus DE 34 34 421 A1 ist eine selbsttätig rückstellbare Bremsbacke einer Teilbelag-Scheibenbremse bekannt, bei der an jeder Stirnseite eines Bremsbelags eine Aussparung ausgebildet und darin ein einzelner an einem Bremsträger abgestützter Führungskörper mit einem Federarm eingesetzt ist. Der Führungskörper ist in der Aussparung mit größeren Reibungskräften festgehalten, als die maximale Rückstellkraft des zugehörigen Federarms. Beim Zustellen wird daher zunächst der Federarm verformt und der Führungskörper mit dem Bremsbelag mitbewegt. Wenn die Bremsbeläge verschleissen, gelangt der Federarm beim Zustellen in seine Maximalauslenkung, die Reibungskräfte zwischen dem Führungskörper und dem Bremsbelag werden dann überwunden, und der Bremsbelag wird nachgestellt. Die Montage der einzelnen Führungskörper ist aufwendig und sie können nicht ein Rattern der Bremsbeläge verhindern.

Aus US 4 422 534 A ist eine Scheibenbremse bekannt, bei der sich eine Feder mit ihrem Mittelabschnitt an einem Bremsträger abstützt und mit ihren Endabschnitten je einen Bremsbelag zur Rotationsachse einer Bremsscheibe gegen eine Stufe am Bremsträger drängt, um Vibration der Bremsbeläge zu verhindern.

Ausgehend von diesen bekannten Anordnungen liegt der Erfindung die Aufgabe zugrunde, eine Teilbelagscheibenbremse bereit zustellen, die gegenüber diesen Anordnungen auch hinsichtlich ihrer Rückstellwirkung auf die Bremsbeläge zur Herstellung eines definierten Bremslüftspiels auch bei Abnutzung der Bremsbeläge verbessert ist, und die eine bessere Abfederung von Beschleunigungskräften an den Bremsbelägen aufgrund von Fahrwerksbescheunigungen bewirkt.

Dazu ist erfindungsgemäß bei der eingangs erwähnten Teilbelagscheibenbremse das Federelement zwischen dem Bremssattel, dem Bremsträger und jedem der beiden Bremsbeläge derart eingespannt, daß die beiden Bremsbeläge zu der Rotationsachse der Bremsscheibe hin gedrängt werden, und daß das Federelement mit beiden Bremsbelägen und mit dem Bremsträger derart in Reibungseingriff steht, daß die Reibkraft zwischen dem Federelement und jedem der Bremsbeläge größer ist als die Reibkraft zwischen dem Federelement und dem Bremsträger.

Dabei weist das Federelement einen U- oder V-förmigen Bügelabschnitt auf, bei dem ein zwischen zwei Schenkeln angeordneter Verbindungsbereich unter Bildung einer jeweiligen ersten Anlagestelle an dem Bremssattel anliegt. Bevorzugt weist jeder der zwei Schenkel einen gekrümmten Abschnitt auf, der einen Vorsprung des jeweiligen Bremsbelags unter Bildung wenigstens einer jeweiligen zweiten Anlagestelle mit Reibungseingriff umgreift.

Auch kann jeder Schenkel des Federelementes in der Verlängerung des jeweiligen gekrümmten Abschnitts eine im Abstand zu der jeweiligen zweiten Anlagestelle liegende jeweilige dritte Anlagestelle an einer Auskragung des Bremsträgers aufweisen, die in eine Aussparung des jeweiligen Bremsbelags ragt, wobei eine erste Seitenwand der Ausnehmung durch den Vorsprung des Bremsbelags gebildet ist.

Weiterhin weist mit Vorteil jeder Schenkel des Federelementes in der Verlängerung der jeweiligen dritten Anlagestelle einen zu einer zweiten Seitenwand der Ausnehmung reichenden Abschnitt auf, der eine jeweilige vierte Anlagestelle aufweist, die an der zweiten Seitenwand anliegt.

Der jeweilige Abschnitt des Federelementes kann auch einen Seitensteg aufweisen, der an der Auskragung des Bremsträgers in der Richtung der Zustellbewegung des jeweiligen Bremsbelags unter Bildung einer fünften Anlagestelle anliegt, wobei der Seitensteg die Oberfläche der Auskragung des Bremsträgers entgegen der Richtung der Zustellbewegung um eine vorbestimmte Strecke überragt und unter Bildung eines Winkels bis zu der fünften Anlagestelle reicht.

Schließlich betrifft die Erfindung auch das Federelement für eine Teilbelagscheibenbremse an sich, wie es vorstehend im Zusammenhang mit der Teilbelagscheibenbremse beschrieben ist.

Weitere Eigenschaften, Vorteile und Merkmale der Erfindung werden anhand der Figuren erläutert. Es zeigen:
- Fig. 1: eine erste Ausführungsform einer Teilbelag-Scheibenbremse eines Kraftfahrzeuges mit eingebauten Bremsbelägen, die über das erfindungsgemäße Federelement abgestützt sind in axialer Ansicht der fahrzeuginneren Seite,
- Fig. 2: eine Draufsicht auf die Teilbelag-Scheibenbremse in Fig. 1 in einer teilweise aufgeschnittenen Ansicht,
- Fig. 3: eine Detail-Seitenansicht eines Bremsbelags mit dem erfindungsgemäßen Federelement, Teilen des Bremsträgers und des Bremssattels,
- Fig. 4: eine schematische stark vergrößerte Draufsicht auf die Bremsscheibe und die beiden auf die Bremsscheibe einwirkenden Bremsbeläge sowie ein erfindungsgemäßes Federelement,
- Fig. 5: eine vergrößerte Seitenansicht auf ein erfindungsgemäßes Federelement,
- Fig. 6: eine vergrößerte Draufsicht auf ein erfindungsgemäßes Federelement,
- Fig. 7: eine vergrößerte teilweise Vorderansicht auf ein erfindungsgemäßes Federelement, und
- Fig. 8: eine Detailansicht einer zweiten Ausführungsform einer erfindungsgemäßen Teilbelagscheibenbremse mit einer anderen Form der Bremsbeläge und einer anderen Form des Federelements,
- Fig. 9: eine vergrößerte Draufsicht auf eine dritte Ausführungsform eines erfindungsgemäßen Federelementes in einer Vorderansicht,
- Fig. 10: das Federelement aus Fig. 9 in einer Draufsicht,
- Fig. 11: das Federelement aus Fig. 9 in einer Seitenansicht, und
- Fig. 12: veranschaulicht die Kräft-, Momenten- und Reibungsverhältnisse zwischen einem Bremsbelag mit dem erfindungsgemäßen Federelement gemäß Fig. 9, Teilen des Bremsträgers und des Bremssattels.

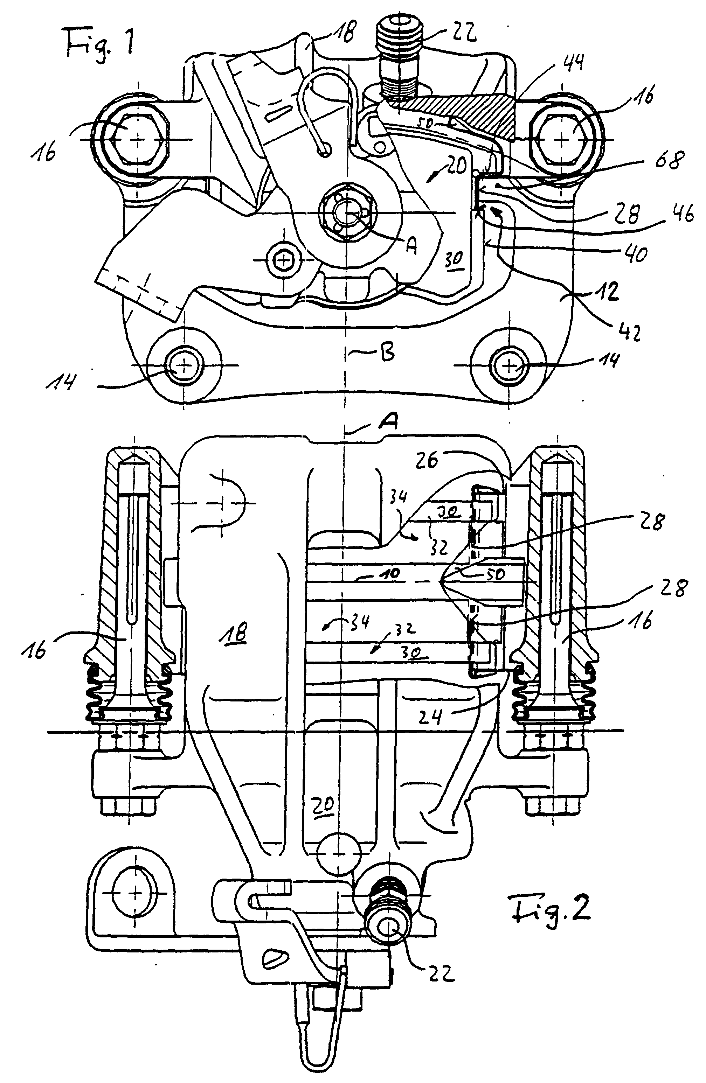

Die dargestellte Teilbelag-Scheibenbremse ist einer Bremsscheibe 10 zugeordnet, deren Drehachse A in den Fig. 1 und 2 angedeutet ist. Die Bremse hat ein tragendes Bremsenteil, das im folgenden als Bremsträger 12 bezeichnet ist. Dieser Bremsträger umgreift im Einbauzustand die Bremsscheibe 10 und weist zu deren Achse A parallele Befestigungslöcher 14 für Schrauben auf, mit denen der Bremsträger 12 am Fahrzeug befestigt wird. Ebenfalls parallel zur Achse A ist am Bremsträger 12 ein Paar Führungsbolzen 16 angeordnet, an denen ein Bremssattel 18 verschiebbar geführt ist. Der Bremssattel 18 umgreift die Bremsscheibe 10 ebenfalls und weist an seiner in Bezug auf das Fahrzeug inneren Seite eine hydraulische Betätigungsvorrichtung 20 mit einem Anschluß 22 für eine Bremsflüssigkeitsleitung auf. An dem Bremsträger 12 sind beiderseits der Bremsscheibe 10 parallel zu dieser voneinander abgewandte Oberflächen 24 bzw. 26 ausgebildet. Im rechten Winkel dazu weist der Bremsträger 12 beiderseits der Bremsscheibe 10 je ein Paar einander zugewandter paralleler Führungsflächen 28 auf, zwischen denen je ein Bremsbelag 30 angeordnet ist.

Jeder Bremsbelag 30 hat eine Rückenplatte 32, beispielsweise aus Stahl, und einen Reibbelag 34 mit einer Bremsfläche 36, die im Einbauzustand auch bei unbetätigter Bremse ständig parallel zur Bremsscheibe 10 und somit im rechten Winkel zu deren Achse A gehalten werden soll. Seitlich ist jede Rückenplatte 32 durch ein Paar paralleler Seitenflächen 40 begrenzt, die im Betrieb Bremskräfte je nach Drehrichtung der Bremsscheibe 10 über die eine oder andere Führungsfläche 28 auf den Bremsträger 12 übertragen. Im oberen Bereich jeder Seitenfläche 40 ist in die Rükkenplatte 32 eine seitlich offene Aussparung 42 eingearbeitet. Die seitliche offene Aussparung 42 ist durch eine erste Seitenwand 44 und eine zweite Seitenwand 46 begrenzt.

Zwischen dem Bremssattel 18, dem Bremsträger 12 und jedem der beiden Bremsbeläge 30 ist ein Federelement 50 eingespannt. Durch das Federelement 50 werden die beiden Bremsbeläge 30 in Richtung auf die Rotationsachse A der Bremsscheibe 10 hin gedrängt. Außerdem bewirkt das Federelement 50, daß nach einer Bremsbewegung (durch eine Zustellbewegung der Betätigungsvorrichtung 20), die auf die Bremsbeläge 30 wirkt, die Bremsbeläge 30 wieder voneinander wegbewegt werden.

Das Federelement 50 verspannt auch den Bremssattel 18 gegen den Bremsträger 12 und verbindet somit ein Klappern, das sonst durch Beschleunigungskräfte hervorgerufen werden würde.

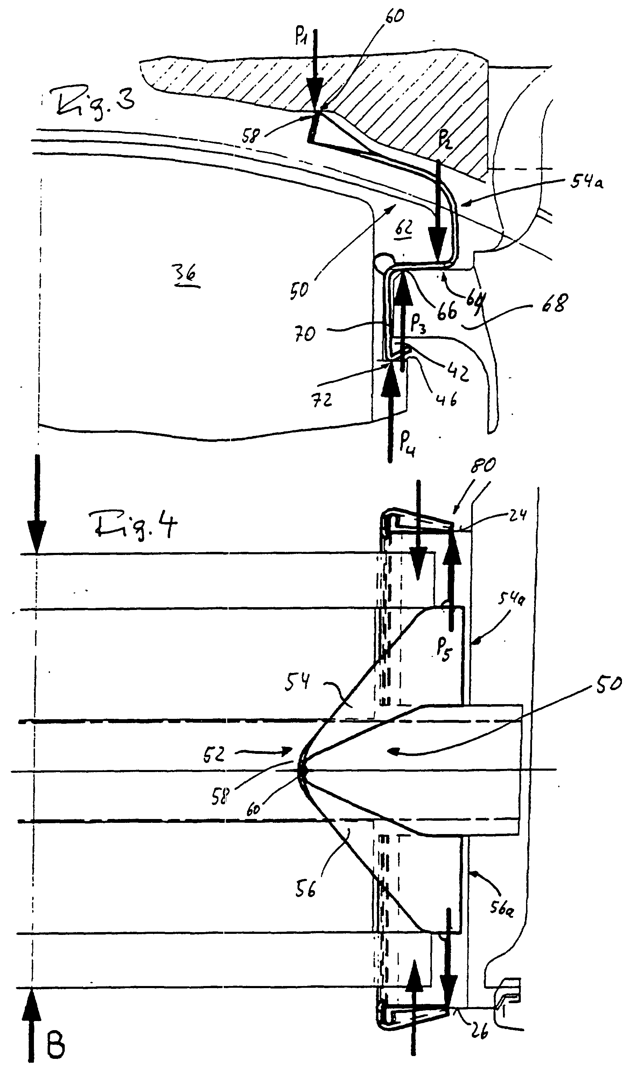

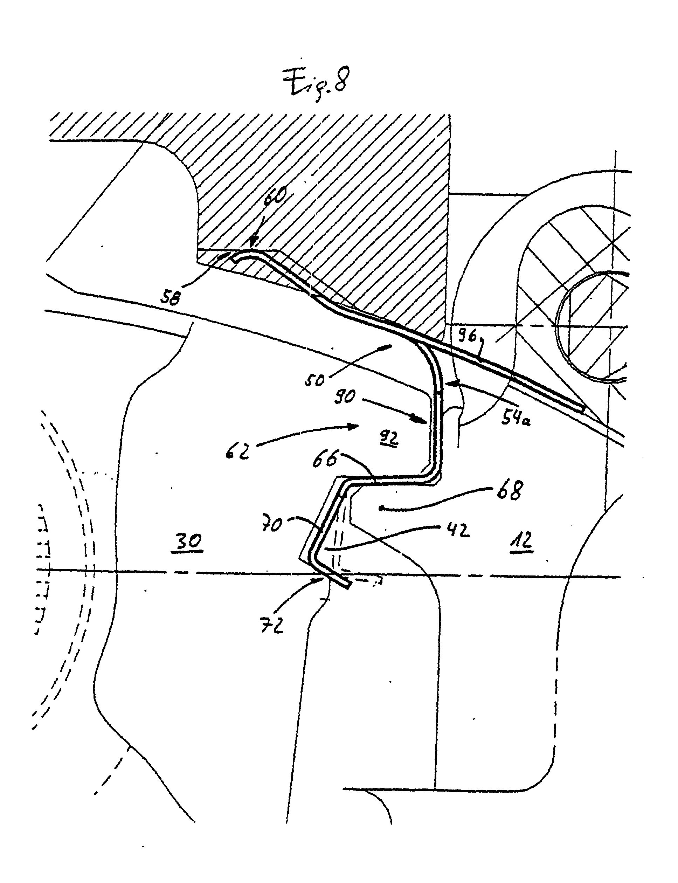

Zur Erläuterung der Gestalt des Federelementes 50, dessen Montage zwischen dem Bremssattel 18, dem Bremsträger 12 und den beiden Bremsbeläge 30 sowie des Zusammenwirkens zwischen dem Federelement 50, dem Bremssattel 18, dem Bremsträger 12 und den beiden Bremsbeläge 30 wird auf die Fig. 3 bis 7 nachstehend Bezug genommen.

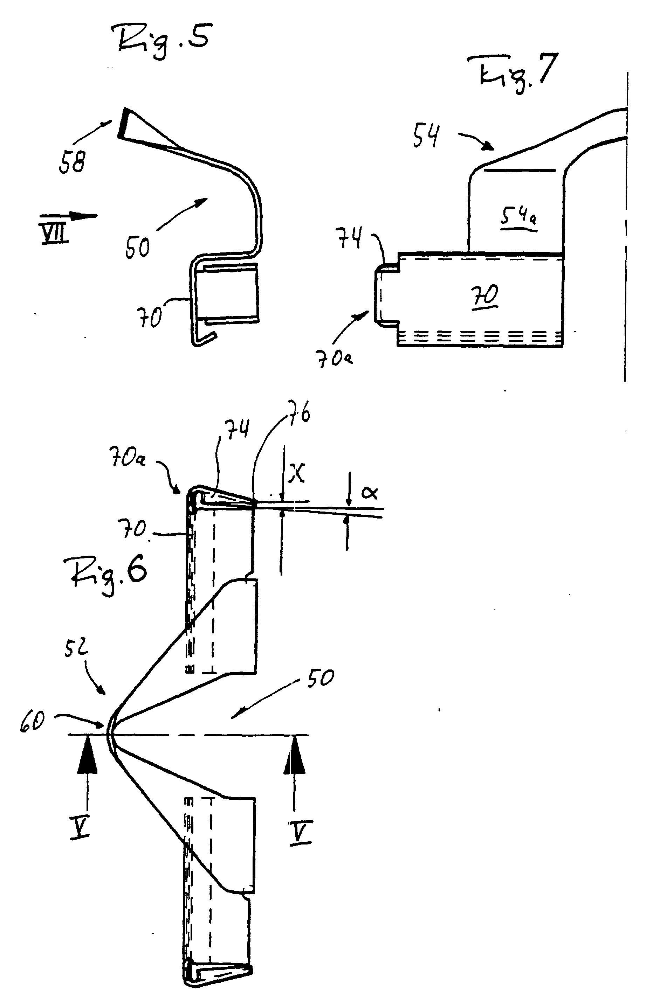

Das Federelement 50 weist einen U- oder V-förmigen Bügelabschnitt 52 auf (siehe Fig. 4 oder 6). Dieser Bügelabschnitt 52 hat zwei Schenkel 54, 56, die durch einen Verbindungsbereich 58 miteinander verbunden sind. Der Verbindungsbereich 58 liegt unter Bildung einer ersten Anlagestelle 60 an dem Bremssattel 18 an. Jeder der beiden Schenkel 54, 56 weist einen gekrümmten Abschnitt 54a, 56a auf, der einen Vorsprung 62 des jeweiligen Bremsbelags 30 mit Reibungseingriff umgreift, so daß eine zweite Anlagestelle 64 zwischen jedem Schenkel 54, 56 des Federelementes 50 und dem jeweiligen Vorsprung 62 jedes Bremsbelags 30 entsteht.

Jeder Schenkel 54, 56 des Federelementes 50 hat in der Verlängerung des jeweiligen gekrümmten Abschnitts 54a, 56a eine im Abstand zu der jeweiligen zweiten Anlagestelle 64 liegende dritte Anlagestelle 66, die an einer Auskragung 68 des Bremsträgers 12 anliegt. Die Auskragung 68 des Bremsträgers 12 weist die Oberflächen 24 und 26 auf und ragt in die Aussparung 42 in der Rückenplatte 32 jeder Bremsbelag 30 hinein. Die Abmessungen der Aussparung 42 des jeweiligen Bremsbelags 30 und die Abmessungen der Auskragung 68 des Bremsträgers 12 sind so bemessen, daß das Federelement 50 im eingebauten Zustand unter Bildung der Anlagestellen mit vorgegebenem geringem Spiel dazwischenpaßt.

In der weiteren Verlängerung der jeweiligen dritten Anlagestelle 66 weist jeder Schenkel 54, 56 des Federelementes 50 einen zu der gegenüberliegenden Seitenwand 46 der Ausnehmung reichenden Abschnitt 70 auf, der eine vierte Anlagestelle 72 bildet, die an der zweiten Seitenwand 46 anliegt.

Die beiden Abschnitte 70 des Federelementes 50 weisten jeweils einen Seitensteg 76 auf, der an der Auskragung 68 des Bremsträgers 12 in der Richtung der Zustellbewegung der jeweiligen Bremsbeläge 30 unter Bildung einer fünften Anlagestelle 80 anliegt. Dabei überragt der Seitensteg 76 die Oberfläche der Auskragung 68 des Bremsträgers 12 entgegen der Richtung der Zustellbewegung um eine vorbestimmte Strecke x (siehe Fig. 2) unter Bildung eines Winkels α und reicht bis zu der fünften Anlagestelle 80.

Da die mit Pfeilen P1, P2, P3, P4, P5 markierten Anlagestellen 60, 64, 66, 72, 80 jeweils in radialer Richtung, bezogen auf die Mittelebene B der Bremsscheibe 10 versetzt sind, werden durch die unterschiedlichen dadurch entstehenden Hebelarme bei ansonsten gleichen Reibwertpaarungen zwischen dem Bremssattel 18 und dem Federelement 50 an der ersten Anlagestelle 60 bzw. dem Vorsprung 62 und dem Federelement 50, an der zweiten Anlagestelle 64 bzw. der Auskragung 68 und dem Federelement 50, an der dritten Anlagestelle 66 bzw. der zweiten Seitenwand 46 und dem Federelement 50, an der vierten Anlagestelle 72 sowie der Begrenzungsfläche 26 der Auskragung 68 und dem Federelement 50 im Bereich der fünften Anlagestelle nach Zustellbewegungen der Bremsbeläge 30 diese wieder von der Bremsscheibe 10 soweit abgehoben, daß ein definiertes Bremslüftspiel sicher erreicht wird.

Das Federelement 50 bildet mit seinem die Bremsscheibe 10 übergreifenden Bereich einen Hebelarm in Form des jeweiligen Schenkels 54, 56, der länger ist als der Hebelarm im Bereich zwischen der zweiten Anlagestelle 64 und der dritten Anlagestelle 66. Damit wird im Bremsbetrieb ein "Steigen" des Bremsbelages gegenüber der Auskragung 68 wirksam vermieden. Der längere Hebelarm zwischen der ersten Anlagestelle und der zweiten Anlagestelle ist der Form der Rückenplatte 32 der Bremsbelag 30 folgend abgekrümmt und schließt dabei einen Winkel von 110° bis 150° ein. Das Federelement läuft weiter unter einem Winkel der zwischen 110° und 80° liegt und zwischen der Oberfläche 44 an dem Vorsprung des Bremsbelags 30 und der Auskragung 68 einläuft. Der Form der Auskragung 68 folgend knickt das Federelement 50 um einen weiteren etwa rechten Winkel ab und reicht zu der vierten Anlagestelle 72 an der Oberfläche 46. Der Abschnitt 70 ist seitlich im Bereich 70a verlängert und kann geschlitzt sein. Das freie Ende 74 (siehe Fig. 6) ist gegenüber dem zwischen den zweiten und dritten Anlagestellen 62, 66 liegenden Abschnitt des Federelementes 50 versetzt abgewinkelt. Damit kann das spitze Ende 76 die fünfte Anlagestelle an der Oberfläche 24 unter dem Winkel α bilden. Bei einem Betätigen der Bremse sind drei Situationen zu unterscheiden. Bei einem leichten Betätigen der Bremse wird die Strecke x auf einen Wert größer Null reduziert, so daß sich der in der Ruhestellung schräggestellte Schenkel 74 nicht an die Oberfläche 24 anlegt. Wenn die Bremsbetätigung beendet ist und die Zustellbewegung der Betätigungsvorrichtung 20 umgekehrt wird, stellt sich die Feder zurück und dabei werden die Bremsbeläge 30 von der Bremsscheibe 10 um einen Weg abgehoben, der so groß ist, daß in der Ruhestellung die Strecke x wieder erreicht ist. In einer zweiten Situation, bei der die Zustellbewegung der Betätigungsvorrichtung 20 etwas stärker ist, wird die Strecke x auf Null reduziert, da sich der in der Ruhestellung schräggestellte Schenkel 74 vollständig an die Oberfläche 24 anlegt. Auch hier wird beim Lösen der Bremsbeläge 30 von der Bremsscheibe 10 die Ruhestellung wieder erreicht, so daß die Bremsbeläge 30 von der Bremsscheibe 10 um die Strecke x abgehoben sind. Bei einer stärkeren Zustellbewegung der Betätigungsvorrichtung 20 wird zunächst der in der Ruhestellung schräggestellte Schenkel 74 vollständig an die Oberfläche 24 angelegt. Falls aufgrund von Abrieb der Bremsbeläge 30 dabei noch kein vollständiger Reibeingriff in der Bremsscheibe 10 erfolgt, kann die Zustellbewegung weiter gehen, so daß die Bremsbeläge 30 mit der Bremsscheibe 10 in Reibeingriff gelangen. Da die Reibkraft zwischen dem Federelement und jedem der Bremsbeläge größer ist als die Reibkraft zwischen dem Federelement und dem Bremsträger, rutschen die Bremsbeläge auf der Auskragung des Bremsträgers in Richtung auf die Bremsscheibe 10 und kommen mit dieser in Reibungseingriff. Beim Aufheben der Zustellbewegung lösen sich die Bremsbeläge 30 von der Bremsscheibe 10 um einen Wert, der der Strecke x entspricht. Damit ist auch bei Abrieb der Bremsbeläge stets ein definiertes Brems-Lüftspiel sichergestellt.

Bei dem vorliegenden Ausführungsbeispiel beträgt die Strecke x etwa 0,5 mm und der Winkel α etwa 2° bis 8°. Die übrigen Hebellängen sind einerseits durch die Dimensionen der Teilbelag-scheibenbremse, der Bremsbelag 30 sowie den verwendeten Materialien wegen der jeweiligen Reibwertpaarungen sowie den Vorspannkräften abhängig, mit denen das Federelement 50 im Bereich der ersten Anlagestelle 60 von dem Bremssattel gegen den Bremsträger bzw. dessen Auskragung 68 gepreßt wird.

Fig. 8 zeigt eine weitere Ausführungsform der Erfindung. Dabei wird durch die Gestaltung der Aussparung 42 des Bremsbelags 30 ermöglicht, die Bremsbeläge 30 in radialer Richtung bezogen auf die Achse A der Bremsscheibe 10 zu montieren. Des weiteren wird die Abstützungsposition des Bremsbelags 30 an dem Bremsträger 12 gegenüber der ersten Ausführungsform günstiger. Dabei wirkt die Abstützung der tangential wirkenden Bremskräfte zwischen dem Bremsbelag 30 und dem Bremsträger 12 direkt am oberen Rand des Bremsbelags 30 in einem Bereich, der mit 90 bezeichnet ist. Dies hat den Vorteil, daß ein "Steigen" des Bremsbelags 30 über den Rand der Bremsscheibe 10 hinaus vermieden wird.

Ein sich von jedem Schenkel des U- oder V-förmigen Bereiches fortsetzender Arm 96 stützt das Federelement 50 an dem Bremsträger 12 ab. Auf die Bremsbeläge 30 wirkende Tangentialkräfte werden über Bereich 90 auf den Bremsträger 12 übertragen. Durch den Federabschnitt 70 in der Ausnehmung 42 werden die Bremsbeläge 30 gegenüber dem Bremsträger 12 abgefedert. Zur Montage wird der Bremsbelag 30 in radialer Richtung bezüglich der Achse A von oben eingeschoben. Dabei schnappt die Feder ein. Vorzugsweise ist die Feder aus Edelstahl hergestellt,um aufgrund von Korrosion auftretende Volumenänderungen des Federelementmaterials zu verhindern. Die Federspannung im Abschnitt 70 des Federelementes 50 läßt sich so einstellen, daß eine definierte Klemmkraft sichergestellt ist.

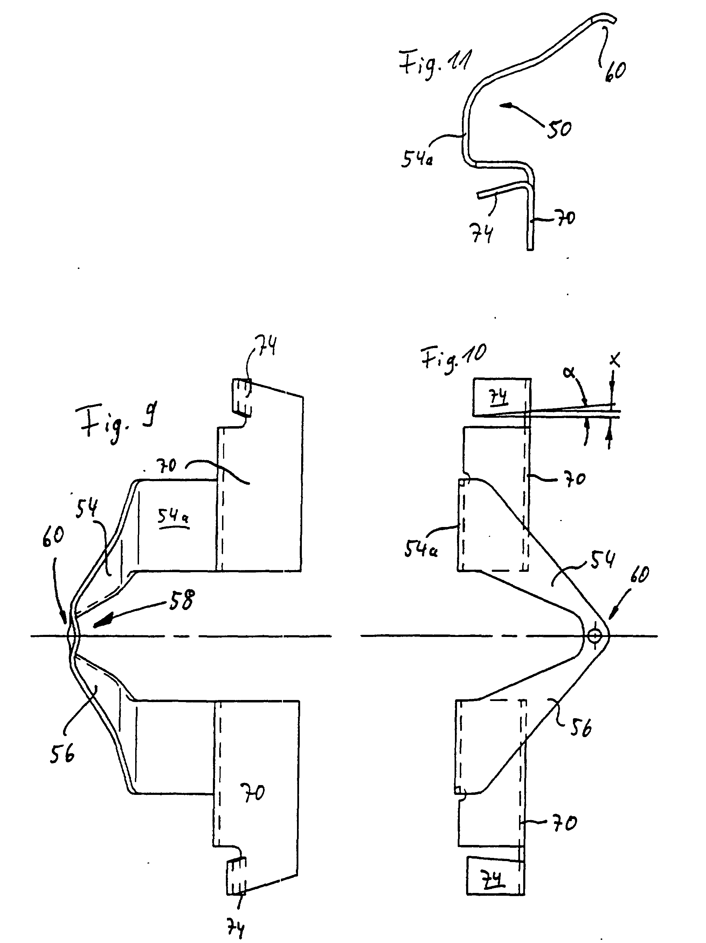

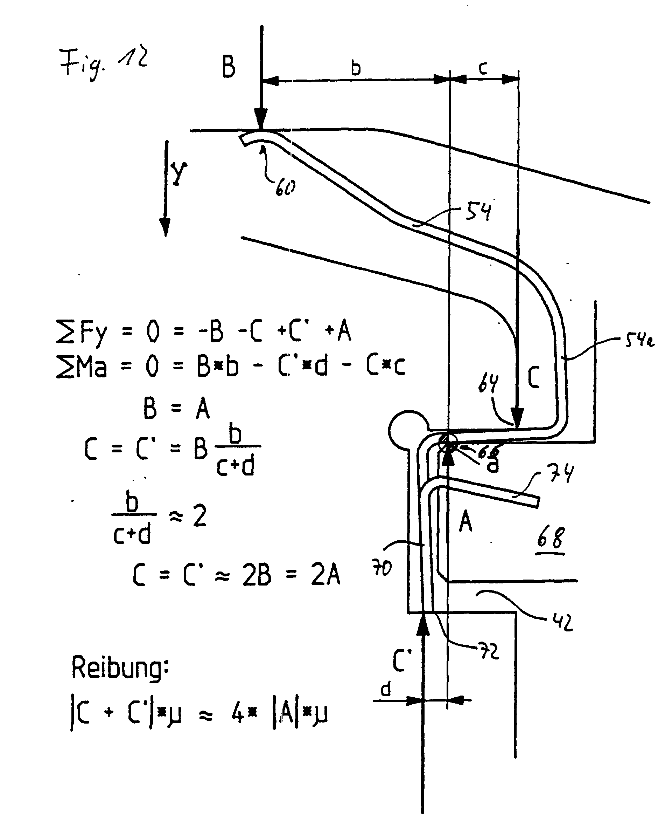

Anhand der Fig. 9 bis 12 wird ein drittes Ausführungsbeispiel der Erfindung erläutert. Da alle drei Ausführungsformen sehr ähnlich sind, wird das dritte Ausführungsbeispiel nur noch insoweit im Detail erläurter als Unterschiede zu den beiden anderen Ausführungsformen vorhanden sind. Ansonsten bezeichnen gleiche Bezugszeichen übereinstimmende Teile in allen drei Ausführungsformen.

Wie in den Fig. 9 und 10 zu sehen ist, wird bei der dritten Ausführungsform die erste Anlagestelle 60 durch eine kugelkalottenförmige Ausbuchtung aus dem V-förmig gestalteten Verbindungsbereich 58 zwischen den beiden Schenkeln 54, 56 gebildet. Ein weiterer Unterschied besteht in der Ausgestaltung des Schenkels 70, der bei dieser Ausführungsform aus einer seitlichen Verlängerung des Abschnitts 70 ausgeformt ist. Das Bremslüftspiel mit der Strecke x bzw. der Winkel α sind jedoch hier ebenfalls vorhanden (siehe beispielsweise Fig. 10). Ein weiterer Unterschied besteht in der Ausgestaltung der vierten Anlagestelle 72 an der Oberfläche 46. Während bei der Ausführungsform nach Fig. 1 der Abschnitt 70 in einem abgewinkelten Ende ausläuft, das die vierte Anlagestelle 72 bildet und bei der zweiten Ausführungsform (Fig. 8) die vierte Anlagestelle 72 flächig gestaltet ist, wird bei dieser dritten Ausführungsform die vierte Anlagestelle 72 durch den unteren Rand des Abschnitts 70 gebildet.

Aus Fig. 12 ist ersichtlich, wie die Hebel- und Kraftverhältnisse bei der dritten Ausführungsform tatsächlich realisiert sind. Aus den verwendeten Dimensionen ergibt sich auch hier der Effekt, daß die Reibkraft zwischen dem Federelement und jedem der Bremsbeläge größer ist als die Reibkraft zwischen dem Federelement und dem Bremsträger.

## Patentansprüche

1. Teilbelagscheibenbremse mit
- einem Bremsträger (12), an dem zwei im Abstand zueinander angeordnete Bremsbeläge (30) gehaltert sind, die zwischen sich eine sich um eine Rotationsachse (A) drehende Bremsscheibe (10) aufnehmen, wobei die beiden Bremsbeläge (30) mit der Bremsscheibe (10) durch eine Zustellbewegung in Eingriff bringbar sind,
- einem an dem Bremsträger (12) angeordneten Bremssattel (18), der die Bremsbeläge (30) und die Bremsscheibe (10) übergreift und in der Bewegungsrichtung der Bremsbeläge (30) durch eine Betätigungsvorrichtung (20) gegenüber dem Bremsträger (12) verschiebbar ist, wobei die Betätigungsvorrichtung (20) die Zustellbewegung der Bremsbeläge (30) bewirkt, und
- wenigstens einem Federelement (50), das die Bremsbeläge (30) nach einer Zustellbewegung wieder voneinander wegbewegt,
wobei das Federelement (50)
- einen U- oder V-förmigen Bügelabschnitt aufweist, bei dem ein zwischen zwei Schenkeln (54, 56) angeordneter Verbindungsbereich (58) unter Bildung einer jeweiligen ersten Anlagestelle (60) an dem Bremssattel (18) anliegt,
- zwischen dem Bremssattel (18), dem Bremsträger (12) und jedem der beiden Bremsbeläge (30) derart eingespannt ist, daß die beiden Bremsbeläge (30) zu der Rotationsachse (A) der Bremsscheibe (10) hin gedrängt werden und
- mit beiden Bremsbelägen (30) und mit dem Bremsträger (12) derart in Reibungseingriff steht, daß die Reibkraft zwischen dem Federelement (50) und jedem der Bremsbeläge (30) größer ist als die Reibkraft zwischen dem Federelement (50) und dem Bremsträger (12).

2. Teilbelagscheibenbremse nach Anspruch 1, **dadurch gekennzeichnet**, daß
- jeder der zwei Schenkel (54, 56) des Federelementes (50) einen gekrümmten Abschnitt (54a, 56a) aufweist, der einen Vorsprung (62) des jeweiligen Bremsbelages (30) unter Bildung wenigstens einer jeweiligen zweiten Anlagestelle (64) mit Reibungseingriff umgreift.

3. Teilbelagscheibenbremse nach Anspruch 2, **dadurch gekennzeichnet**, daß
- jeder Schenkel (54, 56) des Federelementes (50) in der Verlängerung des jeweiligen gekrümmten Abschnitts (54a, 56a) eine im Abstand zu der jeweiligen zweiten Anlagestelle (64) liegende jeweilige dritte Anlagestelle (66) an einer Auskragung (68) des Bremsträgers (12) aufweist, die in eine Aussparung (42) des jeweiligen Bremsbelages (30) ragt, wobei eine erste Seitenwand (44) der Aussparung (42) durch den Vorsprung (62) des Bremsbelages (30) gebildet ist.

4. Teilbelagscheibenbremse nach Anspruch 3, **dadurch gekennzeichnet**, daß
- jeder Schenkel (54, 56) des Federelementes (50) in der Verlängerung zu der jeweiligen dritten Anlagestelle (66) einen zu einer zweiten Seitenwand (46) der Aussparung (42) reichenden Abschnitt (70) aufweist, der eine jeweilige vierte Anlagestelle (72) aufweist, die an der zweiten Seitenwand (46) anliegt.

5. Teilbelagscheibenbremse nach Anspruch 4, **dadurch gekennzeichnet**, daß
- der jeweilige Abschnitt (70) des Federelementes (50) einen Seitensteg (76) aufweist, der an der Auskragung (68) des Bremsträgers (12) in der Richtung der Zustellbewegung des jeweiligen Bremsbelages(30) unter Bildung einer fünften Anlagestelle (80) anliegt, wobei der Seitensteg (76) die Oberfläche (26) der Auskragung (68) des Bremsträgers (12) entgegen der Richtung der Zustellbewegung um eine vorbestimmte Strecke (x) überragt und unter Bildung eines Winkels (α) bis zu der fünften Anlagestelle (80) reicht.

6. Federelement (50) für eine Teilbelagscheibenbremse mit einem Bremsträger (12), an dem zwei im Abstand zueinander angeordnete Bremsbeläge (30) gehaltert sind, die zwischen sich eine sich um eine Rotationsachse (A) drehende Bremsscheibe (10) aufnehmen, wobei die beiden Bremsbeläge (30) mit der Bremsscheibe (10) durch eine Zustellbewegung in Eingriff bringbar sind, und einem an dem Bremsträger (12) angeordneten Bremssattel (18), der die Bremsbeläge (30) und die Bremsscheibe (10) übergreift und in der Bewegungsrichtung der Bremsbeläge (30) durch eine Betätigungsvorrichtung (20) gegenüber dem Bremsträger (12) verschiebbar ist, wobei die Betätigungsvorrichtung (20) die Zustellbewegung der Bremsbeläge (30) bewirkt, und wobei das Federelement (50) die Bremsbeläge (30) nach einer Zustellbewegung wieder voneinander wegbewegt, und wobei
das Federelement (50) so gestaltet und dazu eingerichtet ist, in eingebautem Zustand zwischen dem Bremssattel (18), dem Bremsträger (12) und jedem der beiden Bremsbeläge (30) derart eingespannt zu sein, daß die beiden Bremsbeläge (30) zu der Rotationsachse (A) der Bremsscheibe (10) hin gedrängt werden und wobei das Federelement (50) so gestaltet und dazu eingerichtet ist, in eingebautem Zustand mit beiden Bremsbelägen (30) und mit dem Bremsträger (12) derart in Reibungseingriff zu stehen, daß die Reibkraft zwischen dem Federelement (50) und jedem der Bremsbeläge (30) größer ist als die Reibkraft zwischen dem Federelement (50) und dem Bremsträger (12), und wobei das Federelement (50) einen U- oder V- förmigen Bügelabschnitt aufweist, bei dem ein zwischen zwei Schenkeln (54, 56) angeordneter Verbindungsbereich (58) dazu eingerichtet und so gestaltet ist, daß er in eingebautem Zustand des Federelements (50) unter Bildung einer jeweiligen ersten Anlagestelle (60) an dem Bremssattel (18) anliegt.

## Claims

1. Partially lined disk brake having
- a brake anchor plate (12), on which are supported two brake linings (30), which are disposed at a distance from one another and which between them receive a brake disk (10), which rotates about an axis of rotation (A), wherein the two brake linings (30) are movable into engagement with the brake disk (10) by means of an infeed motion,
- a brake caliper (13), which is disposed on the brake anchor plate (12), overlaps the brake linings (30) and the brake disk (10) and is displaceable relative to the brake anchor plate (12) in the direction of motion of the brake linings (30) by an actuating apparatus (20), wherein the actuating apparatus (20) effects the infeed motion of the brake linings (30), and
- at least one spring element (50), which after an infeed motion moves the brake linings (30) away from one another again,
wherein the spring element (50)
- comprises a U- or V-shaped bow portion, with which a connecting region (58) disposed between two limbs (54, 56) rests with simultaneous formation of a respective first bearing point (60) against the brake caliper (18),
- is clamped in between the brake caliper (18), the brake anchor plate (12) and each of the two brake linings (30) in such a way that the two brake linings (30) are pressed towards the axis of rotation (A) of the brake disk (10) and
- is in frictional engagement with both brake linings (30) and with the brake anchor plate (12) in such a way that the frictional force between the spring element (50) and each of the brake linings (30) is greater than the frictional force between the spring element (50) and the brake anchor plate (12).

2. Partially lined disk brake according to claim 1, **characterized in that**
- each of the two limbs (54, 56) of the spring element (50) comprises a curved portion (54a, 56a), which with frictional engagement embraces a projection (62) of the respective brake lining (30) with simultaneous formation of at least one respective second bearing point (64).

3. Partially lined disk brake according to claim 2, **characterized in that**
- each limb (54, 56) of the spring element (50) has, in the extension of the respective curved portion (54a, 56a) and at a distance from the respective second bearing point (64), a respective third bearing point (66) against an overhang (68) of the brake anchor plate (12) protruding into a recess (42) of the respective brake lining (30), wherein a first side wall (44) of the recess (42) is formed by the projection (62) of the brake lining (30).

4. Partially lined disk brake according to claim 3, **characterized in that**
- each limb (54, 56) of the spring element (50) has, in the extension to the respective third bearing point (66), a portion (70), which extends to a second side wall (46) of the recess (42) and comprises a respective fourth bearing point (72), which rests against the second side wall (46).

5. Partially lined disk brake according to claim 4, **characterized in that**
- the respective portion (70) of the spring element (50) comprises a lateral web (76), which rests against the overhang (68) of the brake anchor plate (12) in the direction of the infeed motion of the respective brake lining (30) with simultaneous formation of a fifth bearing point (80), wherein the lateral web (76) rises above the surface (26) of the overhang (68) of the brake anchor plate (12) counter to the direction of the infeed motion by a predetermined distance (x) and extends with simultaneous formation of an angle (α) to the fifth bearing point (80).

6. Spring element (50) for a partially lined disk brake having a brake anchor plate (12), on which are supported two brake Linings (30), which are disposed at a distance from one another and which between them receive a brake disk (10), which rotates about an axis of rotation (A), wherein the two brake linings (30) are movable into engagement with the brake disk (10) by means of an infeed motion, and having a brake caliper (18), which is disposed on the brake anchor plate (12), overlaps the brake linings (30) and the brake disk (10) and is displaceable relative to the brake anchor plate (12) in the direction of motion of the brake linings (30) by an actuating apparatus (20), wherein the actuating apparatus (20) effects the infeed motion of the brake linings (30), and wherein the spring element (50) after an infeed motion moves the brake linings (30) away from one another again, and wherein the spring element (50) is fashioned and adjusted so as to be, in the installed state, clamped between the brake caliper (18), the brake anchor plate (12) and each of the two brake linings (30) in such a way that the two brake linings (30) are pressed towards the axis of rotation (A) of the brake disk (10) and wherein the spring element (50) is fashioned and adjusted so as to be, in the installed state, in frictional engagement with both brake linings (30) and with the brake anchor plate (12) in such a way that the frictional force between the spring element (50) and each of the brake linings (30) is greater than the frictional force between the spring element (50) and the brake anchor plate (12), and wherein the spring element (50) comprises a U- or V-shaped bow portion, with which a connecting region (58) disposed between two limbs (54, 56) is fashioned and adjusted in such a way that in the installed state of the spring element (50) it rests with simultaneous formation of a respective first bearing point (60) against the brake caliper (18).

## Revendications

1. Frein à disque à garniture partielle comprenant
- un support de frein (12) sur lequel sont disposées deux garnitures de frein (30) espacées l'une de l'autre, qui reçoivent entre elles un disque de frein (10) tournant autour d'un axe de rotation (A), les deux garnitures de frein (30) pouvant être amenées en contact avec le disque de frein (10) par un mouvement d'approche,
- un étrier de frein (18) disposé sur le support de frein (12), qui chevauche les garnitures de frein (30) et le disque de frein (10) et qu'on peut faire coulisser par rapport au support de frein (12) dans la direction de déplacement des garnitures de frein (30) à l'aide d'un dispositif d'actionnement (20), le dispositif d'actionnement (20) réalisant le mouvement d'approche des garnitures de frein (30), et
- au moins un élément élastique (50) qui éloigne à nouveau l'une de l'autre les garnitures de frein (30) après un mouvement d'approche,
l'élément élastique (50)
- présentant une portion en étrier en forme de U ou de V dans laquelle une zone de liaison (58) disposée entre deux branches (54, 56) s'applique contre l'étrier de frein (18) en formant un premier emplacement d'application respectif (60),
- étant serré entre l'étrier de frein (18), le support de frein (12) et chacune des deux garnitures de frein (30) de telle façon que les deux garnitures de frein (30) soit poussées vers l'axe de rotation (A) du disque de frein (10) et
- étant en contact frottant avec les deux garnitures de frein (30) et avec le support de frein (12) de telle façon que la force de frottement générée entre l'élément élastique (50) et chacune des garnitures de frein (30) soit plus grande que la force de frottement générée entre l'élément élastique (50) et le support de frein (12).

2. Frein à disque à garniture partielle selon la revendication 1, **caractérisé en ce que**
- chacune des deux branches (54, 56) de l'élément élastique (50) présente une portion arquée (54a, 56a) qui enveloppe une partie en saillie (62) de la garniture de frein respective (30) en formant au moins un deuxième emplacement d'application respectif (64) avec contact frottant.

3. Frein à disque à garniture partielle selon la revendication 2, **caractérisé en ce que**
- chaque branche (54, 56) de l'élément élastique (50) présente dans le prolongement de la portion arquée respective (54a, 56a) un troisième emplacement d'application respectif (66), disposé espacé du deuxième emplacement d'application respectif (64) sur une saillie (68) du support de frein (12) qui pénètre dans un creux (42) de la garniture de frein respective (30), une première paroi latérale (44) du creux (42) étant formée par la partie en saillie (62) de la garniture de frein (30).

4. Frein à disque à garniture partielle selon la revendication 3, **caractérisé en ce que**
- chaque branche (54, 56) de l'élément élastique (50) présente dans le prolongement du troisième emplacement d'application respectif (66) une portion (70) s'étendant jusqu'à une deuxième paroi latérale (46) du creux (42), laquelle portion présente un quatrième emplacement d'application respectif (72) qui se trouve sur la deuxième paroi latérale (46).

5. Frein à disque à garniture partielle selon la revendication 4, **caractérisé en ce que**
- la portion respective (70) de l'élément élastique (50) présente une aile latérale (76) qui s'applique sur la saillie (68) du support de frein (12) dans la direction du mouvement d'approche de la garniture de frein respective (30) en formant un cinquième emplacement d'application (80), l'aile latérale (76) dépassant la surface (26) de la saillie (68) du support de frein (12) dans la direction opposée au mouvement d'approche d'une distance prédéterminée (x) et s'étendant jusqu'au cinquième emplacement d'application (80) en formant un angle (alpha).

6. Elément élastique (50) pour un frein à disque à garniture partielle comprenant un support de frein (12) sur lequel sont disposées deux garnitures de frein (30) espacées l'une de l'autre, qui reçoivent entre elles un disque de frein (10) tournant autour d'un axe de rotation (A), les deux garnitures de frein (30) pouvant être amenées en contact avec le disque de frein (10) par un mouvement d'approche, et un étrier de frein (18) disposé sur le support de frein (12), qui chevauche les garnitures de frein (30) et le disque de frein (10) et qu'on peut faire coulisser par rapport au support de frein (12) dans la direction de déplacement des garnitures de frein (30) à l'aide d'un dispositif d'actionnement (20), le dispositif d'actionnement (20) réalisant le mouvement d'approche des garnitures de frein (30), et dans lequel l'élément élastique (50) éloigne à nouveau l'une de l'autre les garnitures de frein (30) après un mouvement d'approche, et dans lequel l'élément élastique (50) est configuré et disposé pour être serré, à l'état monté, entre l'étrier de frein (18), le support de frein (12) et chacune des deux garnitures de frein (30) de telle façon que les deux garnitures de frein (30) soit poussées vers l'axe de rotation (A) du disque de frein (10) et dans lequel l'élément élastique (50) est configuré et disposé de façon à être en contact frottant avec les deux garnitures de frein (30) et avec le support de frein (12) de telle façon que la force de frottement générée entre l'élément élastique (50) et chacune des garnitures de frein (30) soit plus grande que la force de frottement générée entre l'élément élastique (50) et le support de frein (12), et dans lequel l'élément élastique (50) présente une portion en étrier en forme de U ou de V dans laquelle une zone de liaison (58) disposée entre deux branches (54, 56) est configurée et disposée de telle façon qu'elle s'applique, à l'état monté de l'élément élastique (50), contre l'étrier de frein (18) en formant un premier emplacement d'application respectif (60).
